# EUROPEAN PATENT APPLICATION

(11) **EP 2 070 572 A2**
(43) Date of publication of application: **17.06.2009**
(21) Application number: 08290627.2
(22) Date of filing: 27.06.2008
(51) Int. Cl.: A63H 33/38

(54) **Improved roller system for toys and books**

(30) Priority: 14.12.2007 US 2149
(71) Applicant: Legrand, Christian Noël Guy, 11110 Nonthaburi (TH)
(72) Inventor: Legrand, Christian Noël Guy, 11110 Nonthaburi (TH)
(74) Representative: Serin, Jean-Pierre

(57) **Abstract**

An improved roller system includes a roller support body (12) having a center longitudinal axis and a base wall and at least one roller unit (30) mounted within the roller support body (12). Each of the roller units (30,32,34) include a ball-retaining cavity which extends upwards within the roller support body and a generally spherical roller ball (46) rotatably mounted there within, and a roller ball (46) retention device rotatably retains the roller ball within the ball-retaining cavity with a lower portion of the roller ball extending below the base wall of the roller support body such that the roller support body is rollably supported on the roller ball. A main book support strut (20) is mounted on and extends from the roller support body. At least two book pages are bound together via a book binding in a book format, and pages are mounted on the main book support strut on the roller support body (12).

## Description

### BACKGROUND OF THE INVENTION

### 1. Technical Field

The present invention is directed to rolling or moving toys and books and, more particularly, to an improved roller system for toys and books which includes a roller support body and at least two roller units mounted within the roller support body. Each of the roller units include a ball-retaining cavity which extends upwards within the roller support body and a generally spherical roller ball rotatably mounted there within, and a roller ball retention device rotatably retains the roller ball within the ball-retaining cavity with a lower portion of the roller ball extending there below such that the roller support body is supported on the roller ball. A main book support strut may be mounted on the roller support body, and this may support at least two book pages which are bound together via a book binding in a book format, or a toy vehicle body structure may be supported thereon.

### 2. Description of the Prior Art

There are many different kinds of books and book bindings which are currently used in the publishing industry. While the majority of books are constructed of paper and paper products, there are many different types of children's books which are constructed of different materials such as cloth, foam, or other such materials, in order to provide additional tactile sensations for the children reading the books. Recently, one of the more popular types of manufacturing materials used in connection with children's books are thin plates of foam which constitute the pages and front and rear covers of the children's books. These are bound together in many different ways and assembled to form many different shapes and sizes of children's books, but in general, these function only as books and not as toys which can be played with.

Of course, this is not a disadvantage when there is no intent to use the books as toys, but it would significantly add to the enjoyment of the book if it could also be used as a toy and not just as a book.

One of the most popular subjects for children's books involve vehicles of many different sizes and shapes. For example, books about the many different types of trucks are very popular with boys and girls of ages two to ten, and this is why there are numerous children's books on this subject. However, it is also true that the level of excitement and interest generated by such books is limited in that the child cannot physically experience what it is like when a vehicle is in motion. To experience this, the child must play with various kinds of vehicular toys which replicate the much-larger versions which travel on our streets and highways. It is believed, however, that it would be truly exciting and interesting for a child if he or she were not only able to read about various types of vehicles in a book, but also play with the book as a toy which replicates at least one of the vehicles which are displayed within the book. There is therefore a need for such a vehicle-shaped book which also functions as a toy.

However, it has also been found that the presently available vehicle-shaped books only roll in a single direction, aligned with the wheels, and for small children, it is difficult to properly propel the book in an enjoyable and exciting manner. There is therefore a need for a improved vehicle-shaped book which includes a roller system which will permit the book to be rolled in many different directions and which can be constructed in configurations other than those which are currently available.

Also, there is a need for such a roller system which is usable in connection with not only books, but also with rolling toys such as vehicles, robots and other such toys. A toy vehicle which rolls in any direction in response to a push from a child will be of far more interest than the standard type of toy vehicle having wheels, as it will be easier for the child to make it move and will therefore likely will generate less frustration, thus increasing the level of play enjoyment for the child and encouraging extended play time with the toy outfitted with the roller system of the present invention.

Therefore, an object of the present invention is to provide an improved roller system for toys and books which includes roller units instead of wheels which allow the book to function either as a book or a toy.

Another object of the present invention is to provide an improved roller system which includes roller support body having an upright book support strut and at least two book pages, each page preferably including a middle foam plate and front and back semi-rigid paper plates mounted on and sandwiching the middle foam plate, the book pages bound by a binder in a book format, the book pages supported on the book support strut perpendicular or parallel to the longitudinal axis of the roller support body and at least one front and two rear roller units mounted within the roller support body whereby the improved roller system is rollable on the front and rear roller units.

Another object of the present invention is to provide an improved roller system which visually resembles a selected vehicle or device such as a robot, truck, car, airplane, or other such vehicle so that the child playing with the toy may freely roll the vehicle and thus freely play with the vehicle thereby increasing their enjoyment and interest in the toy.

Another object of the present invention is to provide a improved roller system for toys and books in which the roller unit or units are powered by a mechanical or electric motor device to drive the improved roller system and thus the toy or book in a selected direction.

Finally, an object of the present invention is to provide a improved roller system which is relatively simple and economical to manufacture and which is safe, effective, and efficient in use.

### SUMMARY OF THE INVENTION

The present invention provides an improved roller system including a roller support body having a center longitudinal axis and a base wall and at least two roller units mounted within the roller support body. Each of the roller units include a ball-retaining cavity which extends upwards within the roller support body and a generally spherical roller ball rotatably mounted there within, and a roller ball retention device is mounted on the roller support body for rotatably retaining the roller ball within the ball-retaining cavity with a lower portion of the roller ball extending below the base wall of the roller support body such that the roller support body is rollably supported on the roller ball. A main book support strut may be mounted on and extend from the roller support body. The invention may further include at least two book pages which are bound together via a book binding in a book format wherein the at least two book pages are generally parallel with one another, and at least one of the at least two book pages and the book binding means would then be mounted on the main book support strut on the roller support body, or the roller support body may be constructed in the shape and design of a selected vehicle, robot or other such moving object, and this embodiment would not include any book pages mounted thereon.

The present invention thus provides a substantial improvement over those roller systems found in the prior art. For example, because the improved roller system does not incorporate axles or other such mounting devices for the roller balls within the ball-retaining cavities, it is a far more difficult matter to significantly damage the roller units than that encountered with the standard wheel and axle structure found in connection with the majority of toy vehicles and vehicle or robot shaped books. Furthermore, because the present invention not only can be used as a book, but also can be played with by the child as a toy, it is far more likely that the child's interest will be maintained for a greater period of time than with those single use books and toys found in the prior art. Also, because the improved roller system of the present invention permits the chassis body to be moved in any direction by the child, the frustration level encountered with the use of standard vehicle designs is generally eliminated and the toy including the present invention thus may be used and enjoyed by a greater range of ages of children. Finally, it is believed that the combination of the book and toy features of the present invention will make playing, reading and learning more enjoyable for the child, which is clearly the goal of educational toys and books. It is therefore believed that the improved roller system of the present invention provides a substantial improvement over those wheel and roller devices and structures found in the prior art.

### BRIEF DESCRIPTION OF THE DRAWINGS

Figure 1 is a perspective view of a robot toy or book design incorporating the improved roller system of the present invention;
Figure 2 is a bottom perspective view of the present invention showing the improved roller system;
Figure 3 is a detailed side elevational view of the present invention showing the roller balls mounted within the ball-retaining cavities;
Figures 4a, 4b, and 4c are detailed side elevational views illustrating alternative embodiments of the roller units of the present invention;
Figure 5 is a perspective view of an alternative embodiment of the present invention wherein the improved roller system is used in connection with a improved roller system;
Figure 6 is a bottom perspective view of the improved roller system; and
Figure 7 is a detailed side elevational view of the improved roller system showing the roller units mounted within the roller support body.

### DESCRIPTION OF THE PREFERRED EMBODIMENT

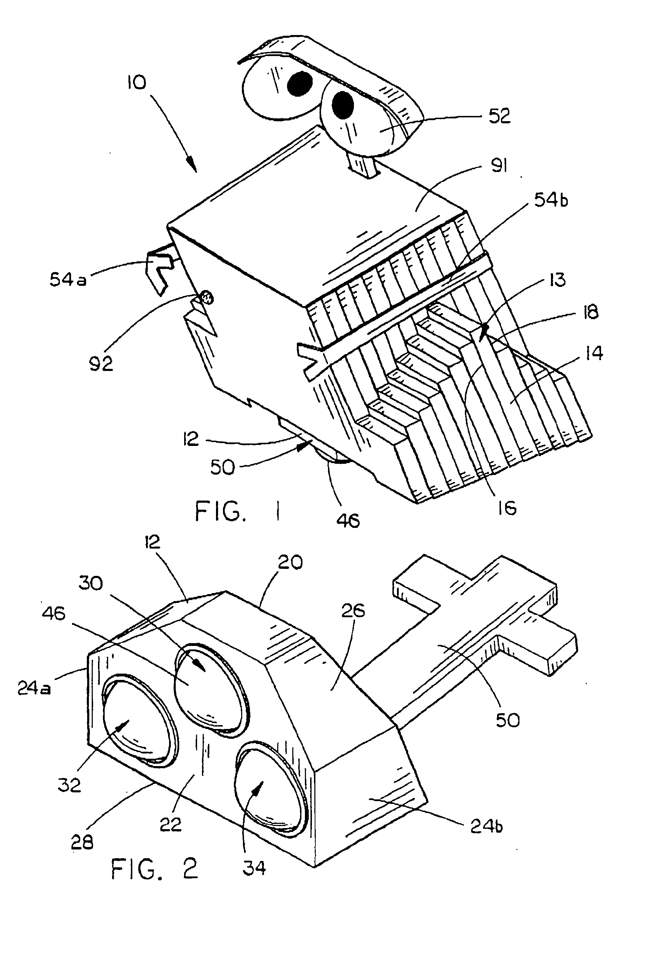

The improved roller system 10 for toys and books of the present invention is shown best in Figures 1-4c as including a roller support body 12 and an optional book support structure 50 mounted on and extending upwards from the roller support body 12. In the preferred embodiment, the roller support body 12 would be constructed as a generally rectangular or angular box-like structure which includes a top wall 20, base wall 22, side walls 24a and 24b, and front and rear walls 26 and 28, although the exact size, shape and configuration of the roller support body 12 will be subject to significant modification depending on the design configuration desired for the particular embodiment of the device and is not significant to the functionality of the present invention except as will be described later in this disclosure. Of course, as the present invention is designed for use in connection with both toys and/or books, numerous design configurations will be incorporated into use with the improved roller system 10 of the present invention, and such design modifications should be understood to be a part of this disclosure. It is also preferred that the roller support body 12 be constructed of a molded plastic material as it has been found that such construction materials are easy to work with, safe and non-toxic for children, and can be configured in many different shapes and sizes merely by modifying the mold or molds producing the roller support body 12.

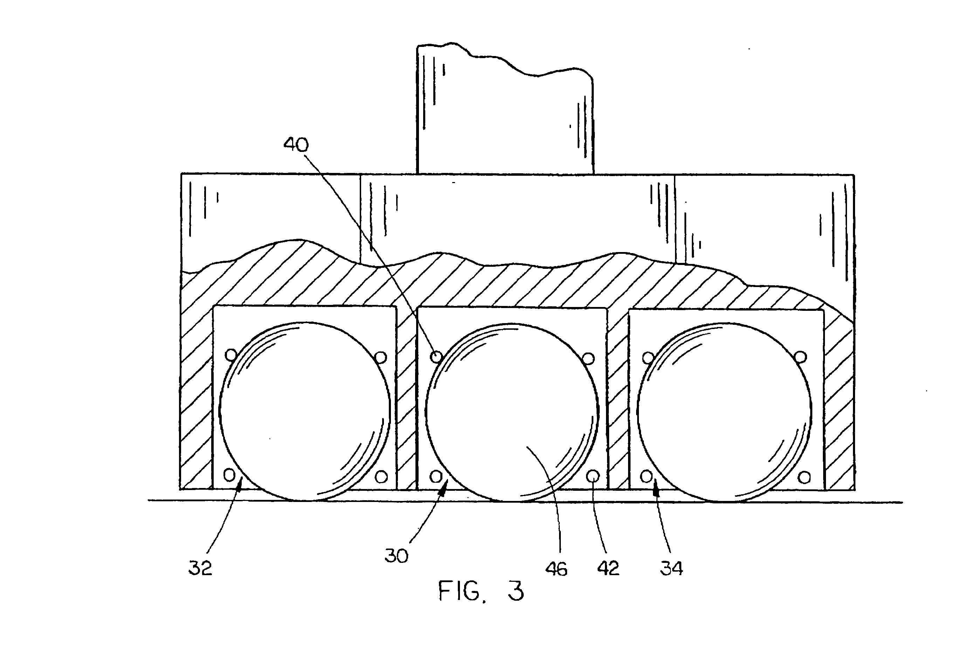

Formed or mounted within the roller support body 12 are a plurality of roller units 30, 32, and 34 which, in the preferred embodiment, would be generally identical to one another and would be positioned as shown best in Figure 2 with one forward roller unit 30 and two rearward roller units 32 and 34. Of course, as few as one roller unit may be used in connection with any particular design configuration, but it is believed that for stability, the use of three or more units is preferable. In the preferred embodiment, the roller units 30, 32, and 34 are generally identical to one another, and therefore the following description of forward roller unit 30 should be understood to apply generally and specifically to rearward roller units 32 and 34. The forward roller unit 30 of the present invention is best shown in Figures 2 and 3 as including a generally cylindrical ball-retaining cavity 38 which extends upwards from base wall 22 of roller support body 12 into roller support body 12 and which has a diameter slightly greater than the diameter of the roller ball 46 housed there within. The diameter of roller ball 46 will preferably be between one inch and four inches, and therefore the diameter of ball-retaining cavity 38 would be slightly greater than the diameter of roller ball 46. As shown best in Figure 3, roller ball 46 is rotatably retained within the ball-retaining cavity 38 via upper and lower ball retaining rings 40 and 42, with lower ball-retaining ring 42 preferably mounted generally flush with the base wall 22 of roller support body 12, as shown best in Figure 2. It is further preferred that the upper and lower ball-retaining rings 40 and 42 be constructed of a low friction plastic material such as UHMW or the like which will provide the low coefficient of friction necessary to permit the roller ball 46 to rotate within the ball-retaining cavity 38 yet will also provide a long-lasting, safe and non-toxic construction material for the upper and lower ball-retaining rings 40 and 42. Of course, many other types of materials may be substituted for the UMW material described above, and such substitution should be understood to be a part of this disclosure.

It is further preferred that the roller ball 46 be constructed of a relatively dense material such as stone, metal or high-density plastic in order to increase the mass of the roller ball 46 so that when a child or other user of the present invention pushes the roller support body 12, such that the roller support body 12 rolls on the forward roller unit 30, left rear roller unit 32, and right rear roller unit 34, the relatively large mass of the roller balls 46 will create increased inertia which will allow the roller support body 12 to have increased inertia and thus roll farther in response to and in connection with the initial force applied by the child. Of course, it is important that the roller balls 46 not be too massive as this will prevent the user from easily rolling the roller support body 12 on the roller balls 46, and therefore it is believed that through use of the present invention, appropriate masses for the various sizes and designs of the roller support body 12 and roller balls 46 will be determined.

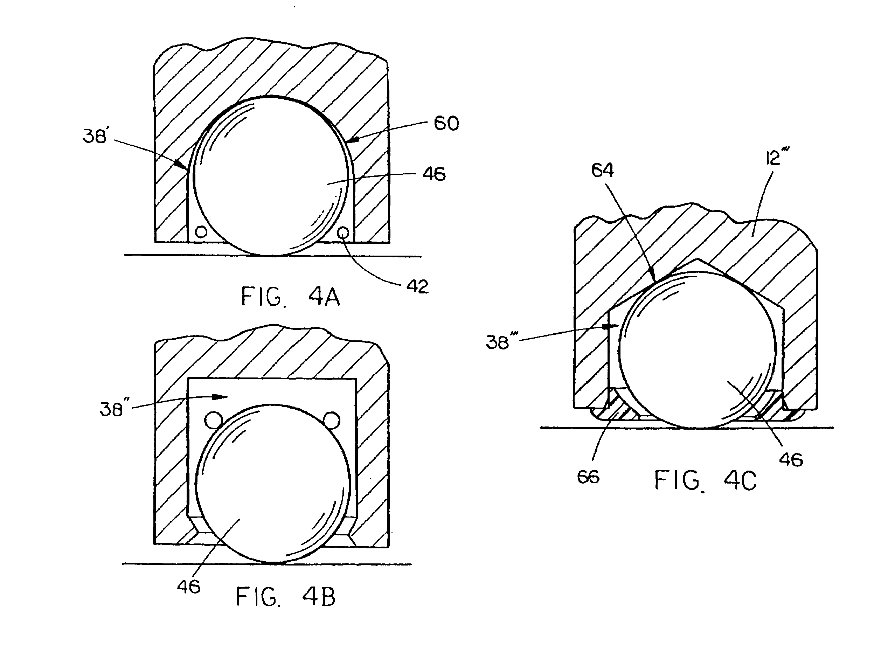

Figures 4a, 4b, and 4c each disclose alternative designs for the forward roller unit 30 and hence left and right rear roller units 32 and 34. Specifically, Figure 4a discloses a ball-retaining cavity 38' which includes a curved upper wall 60 which, in the preferred embodiment, would be generally hemispherical in shape and would be lined with a friction-reducing liner material in order to permit the roller ball 46' to rotate easily there within. Figure 4b discloses a second alternative embodiment of the ball-retaining cavity 38" which includes a lower ball-retaining structure 62 which generally replaces the lower ball-retaining ring 42 as described previously, and therefore serves to retain the roller ball 46 there within. Finally, Figure 4c discloses a third alternative embodiment in which the upper wall 64 of ball-retaining cavity 38''' is generally conical in shape and thus contacts the roller ball 46 along a circular region defined by a chord plane extending through the roller ball 46. Also, Figure 4c discloses an alternative lower ball-retaining structure 66 which retains the roller ball 46 there within yet still permits the roller ball 46 to rotate within the ball-retaining cavity 38"'. The embodiment of Figure 4c may be better suited for use on bare floor surfaces or the like, as the ground clearance of the roller support body 12''' is less than that shown in connection with Figures 2, 3, 4a, and 4b. However, modification of the position of the roller ball 46 within each of the embodiments shown in Figures 4a, 4b, and 4c should be understood to be well within the purview of the person of ordinary skill in the related art, and therefore such minor modifications should be understood to be a part of this invention.

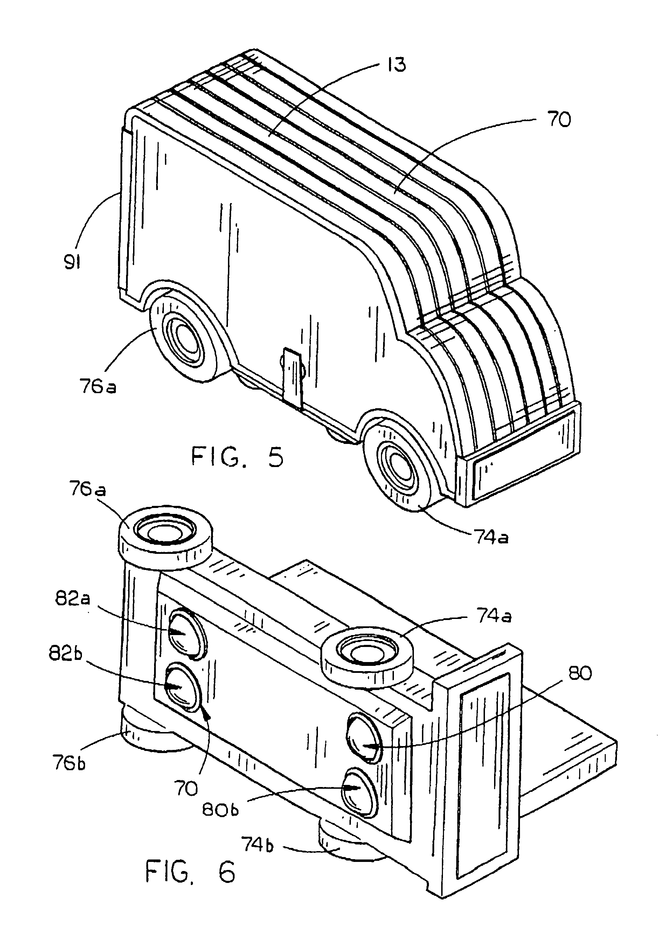

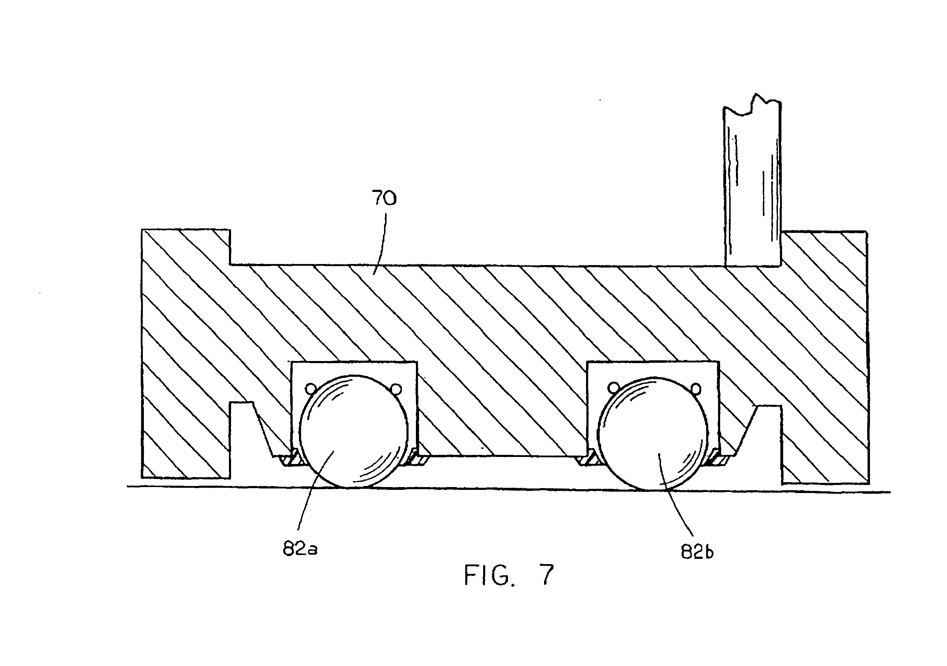

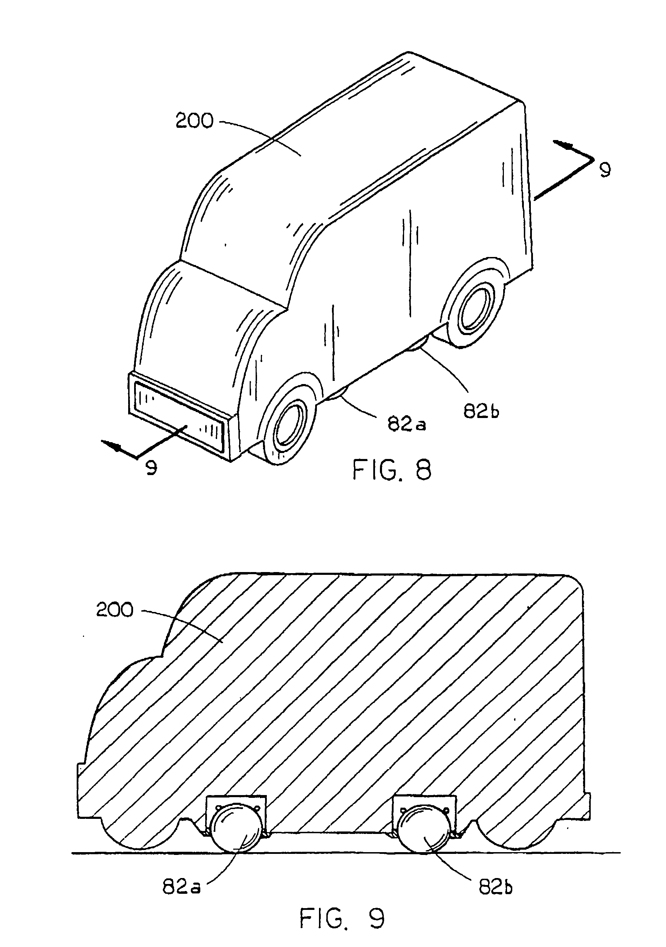

Figures 5, 6, and 7 disclose a further alternative embodiment of the present invention which includes a roller support body 72 which is preferably constructed as a molded plastic generally rectangular box, although the precise construction material used in connection with the roller support body 72 is not critical so long as the roller support body 72 provides a stable, sturdy chassis body for the improved roller system 70 disclosed in Figures 5-7. The roller support body 72 further includes front and rear wheels 74a, 74b, 76a, and 76b which, in the preferred embodiment, would be small plastic or rubber wheels which provide the illusion of the standard wheels on a vehicle.

In actuality, however, the roller support body 72 is movably mounted on a plurality of roller units 80a, 80b, 82a, and 82b which are preferably constructed in same manner as that described previously in connection with the forward roller unit 30, as shown in Figures 1-4c. It has been found that because the front and rear roller units 80a, 80b, 82a, and 82b permit the improved roller system 70 to be moved in any direction, the enjoyment of playing with the toy outfitted with the improved roller system 70 is increased and furthermore, because the front and rear roller units 80a, 80b, 82a, and 82b do not included axle structures such as those used in connection with standard wheels such as front and rear wheels 74a, 74b, 76a, and 76b, the probability of damage to the front and rear roller units 80a, 80b, 82a, and 82b is greatly reduced, thus extending the usable life span of the improved roller system 70 outfitted with the front and rear wheel units and simultaneously increasing the desirability and playability of the improved roller system 70. It is therefore believed that the use of the front and rear roller units 80a, 80b, 82a, and 82b in connection with the improved roller system 70 provides a substantial improvement over those devices found in the prior art.

A plurality of book pages 13 may also be provided. It should be noted that the book pages 13 may be constructed of many different construction materials, such as paper, cardstock, plastic or another such generally planar construction material, but in the preferred embodiment, each of which would preferably be constructed of a foam material in substantially the same manner. Specifically, each of the pages 13 would include a middle foam plate 14 and front and back semi-rigid paper plates 16 and 18, the front and back paper plates 16 and 18 secured to the middle foam plate 14 by an adhesive material or the like to ensure that the front and back paper plates 16 and 18 remain attached to the middle foam plate 14. In the preferred embodiment the middle foam plate 14 would preferably be constructed of a foam material, specifically the foam marketed under the common name "Eva Foam," which is a polymer foam made of ethyl-vinyl acetate and which is non-toxic and resilient to tearing, and thus is quite safe for use with children. One of the advantages of Eva Foam is that it is pliable and thus is safe for use by children, but in the present invention, however, it is preferable to combine the foam plate with material more conducive for printing indicia and pictures thereon, and it is for this reason that the front and back paper plates 16 and 18 are mounted on the middle foam plate 14.

In the preferred embodiment, the front and back paper plates 16 and 18 would be constructed of a semi-rigid paper material such as cardstock or the like which would readily receive printed indicia thereon for printing of the book pages, and will also provide additional rigidity for the middle foam plate 14. Furthermore, it is important that the front and back paper plates 16 and 18 have dimensions slightly smaller than the middle foam plate 14 such that the middle foam plate 14 extends beyond the edges of the front and back paper plates 16 and 18, as shown best in Figures 1 and 2, thus ensuring that the edges of the pages 13 are foam, thus preventing paper cuts or other injuries to children using the present invention. A final important consideration for the pages 13 is that they may be constructed of virtually any size, shape, and thickness via die cut or other cutting method, which means that the improved roller system 10 may be constructed to replicate the shape of almost any vehicle or device, thereby greatly increasing the potential audience for the present invention. Therefore, the particular vehicle shapes shown in Figures 1-7 should be understood to be only illustrative of the types of vehicles which may be replicated by the present invention, which are only limited by the economic, manufacturing, and purchasing restrictions set by the manufacturer and the marketplace.

A binder 91 extends across and connects the rear edges of each of the book pages 13, as shown best in Figures 1 and 2, and in the preferred embodiment, the binder 91 would be a reinforced paper sheet which is connected to the pages by an adhesive such as glue or the like. Of course, other types of binders may be used in connection with the improved roller system 10 of the present invention so long as the book pages 13 are secured in a book format as shown in Figures 1 and 2 and the pages are free to be opened from their closed position shown best in Figure 1 to the open position shown in other figures.

As was mentioned previously, mounted on and extending upwards from the roller support body 12 is a main book support strut 50, which, in the preferred embodiment, would be a rigid strut constructed of material similar to that used in connection with the roller support body 12 and would have a height of approximately three to ten inches. In the preferred embodiment, the plurality of book pages 13 would be mounted on the main book support strut 20 by connection to one or more of the book pages 13 or via connection to the binder 91, and the book pages 13 could extend generally perpendicular to the center longitudinal axis of the roller support body 12 as shown in Figure 1, or could extend generally parallel to the center longitudinal axis of the roller support body 12 as shown in Figure 5-7, such that the book pages 13 would open forwards or rearwards or sideways relative to the direction of travel of the roller support body 12, depending only the configuration used in the particular embodiment of the present invention. It should be noted that although the book pages 13 could each be of approximately the same shape, one of the unique elements of the present invention is that the book pages 13 may be of different shapes to present an overall configuration which resembles a selected vehicle or device, such as a truck, robot, automobile, or other such vehicle or device. In the embodiment shown in Figure 1, the improved roller system 10 is configured to resemble a robot including eyes 52 and hands 54a and 54b, although it should be noted, as was stated previously, that many different sizes and shapes and designs of vehicles and devices may be represented by the improved roller system 10 of the present invention merely by cutting the book pages 13 to the appropriate shape.

It should be noted that it will be a relatively minor engineering feat to connect one or more of the forward roller unit 30, left rear roller unit 32, or right rear roller unit 34 to a mechanical or electric motor device 90 which would be mounted within the roller support body 12 or directly underneath the roller support body 12, the motor 50 operative to propel the improved roller system 10 forward over a ground surface, thus propelling the toy or vehicle-shaped book. Numerous different types of motors 50 may be used in connection with the present invention, although it has been found that a simple mechanical motor using a flywheel, coil spring or the like would provide sufficient power to propel the improved roller system 10 of the present invention.

The improved roller system 10 of the present invention as shown in Figures 1-4c may further include a page securement device 92 which releasably connects an outer book page 13 to the roller support body 12 or to other pages. In the preferred embodiment, the page securement device 92 would be a hook-and-loop fastener which has one section thereof affixed to one of the outer book pages 13 and the other section affixed to the roller support body 12 such that upon the two sections of the hook-and-loop fastener contacting one another when the outer book page 13 is in closed position, the outer book page 13 is releasably connected to the roller support body 12 via the page securement device 92 to releasably secure the improved roller system 10 in its closed position as shown best in Figure 1. Of course, many different types of securement devices may be used in connection with the present invention to secure the pages in closed position, any of which may be substituted for the page securement device 92 described herein.

The improved roller system 10 of the present invention as shown in Figures 1-4c may also include additional elements to replicate various styles of vehicles and devices. It should be also be noted that because the book pages 13 each include front and rear paper plates 16 and 18, as shown in Figures 1-4c, it is a relatively simple matter to print virtually any kind of pictures, words, or other indicia 94 on the book pages 13 which will be shown in the improved roller system 10. Also, it should be noted that the same holds true if the book pages 13 are constructed of just the foam material or just of paper such as cardstock or the like, as the foam or paper material may be printed on by many different commercial printing methods, any of which would be understood by one skilled in the art of printing on alternative page construction materials. The important consideration, however, is that the improved roller system 10 may be constructed in many different sizes and shapes, and the printed materials which are printed on the book pages 13 may tie into and enhance the selected shape of the improved roller system 10.

It is to be understood that numerous additions, substitutions and modifications may be made to the improved roller system 10 of the present invention which fall within the intended broad scope of the appended claims. For example, the size, shape, overall appearance and construction materials used in connection with the roller units 30, 32, and 34 may be modified or changed, as well as the number of roller units used in connection with a particular vehicle design. Also, the size, shape and design of the roller support body 12 may be modified or changed to replicate various types of moving objects, and it is expected that the outer portion of the roller support body 12 may be constructed of a foam material as described in connection with the book pages 13 in order to improve the tactile sensations for the child playing with the toy and also increase the safety factor for the toy. Furthermore, the precise nature by which the roller ball 46 is held within the ball-retaining cavity 38 is not particularly critical to the present invention so long as relatively unencumbered rotation of the roller ball 46 is permitted there within. It should be further noted that although the present invention has been described as being designed generally for use with foam-based pages which form the body of the book mounted thereon, many types of book pages may be used with the present invention so long as the improved roller system 10 is not significantly functionally modified. Furthermore, the specific number of wheels used in connection with the present invention may be modified or changed if the vehicle intended to be replicated includes more or fewer wheels than described previously. For example, should the present invention be used to replicate a different type of robot, the improved roller system 10 could include several wheels or even could include treads such as those found on tanks and the like. Finally, it is important to note that the position of the roller ball 46 relative to lower ball-rotating ring 42 should be relatively constant in order to prevent gas forming between the roller ball 46 and lower ball-rotating ring 42 which could create "pinch points" for small fingers and toes which would potentially be positioned between the roller ball 46 and lower ball-retaining ring 42.

There has therefore been shown and described an improved roller system 10 which accomplishes at least all of its intended objectives.

## Claims

1. An improved roller system for toys and books comprising:
a roller support body having a center longitudinal axis and a base wall;
at least one roller unit mounted within said roller support body including;
a ball-retaining cavity which extends upwards within said roller support body;
a generally spherical roller ball rotatably mounted there within;
roller ball retention means mounted on said roller support body for rotatably retaining said roller ball within said ball-retaining cavity with a lower portion of said roller ball extending below said base wall of said roller support body such that said roller support body is rollably supported on said roller ball; and
said roller support body freely movable in any direction parallel with a ground surface said roller support body is traveling on in response to force being applied thereto.

2. The improved roller system of claim 1 further comprising a main book support strut mounted on and extending from said roller support body, at least two book pages, book binding means binding said at least two book pages in a book format wherein said at least two book pages are generally parallel with one another; and at least one of said at least two book pages and said book binding means mounted on said main book support strut on said roller support body.

3. The improved roller system of claim 2 wherein said at least two book pages each are constructed as including a middle foam plate and front and back semi-rigid paper plates mounted on and sandwiching said middle foam plate.

4. The improved roller system of claim 3 wherein said middle foam plate is larger than said front and back semi-rigid paper plates such that said middle foam plate extends beyond the edges of said front and back paper plates whereby the edges of each of said panels are foam to generally prevent contact injuries to children handling said improved roller system.

5. The improved roller system of claim 2 wherein said book binding means comprises a reinforced paper sheet extending across and connecting adjacent edges of each of said at least two book pages whereby said at least two book pages are secured in a book format, said pages being freely movable between a closed position aligned generally parallel with one another and an open position partially separated from one another.

6. The improved roller system of claim 5 wherein said book binding means is connected to said top edges of said at least two book pages by an adhesive substance.

7. The improved roller system of claim 1 wherein said roller support body is a generally rectangular box having an interior volume.

8. The improved roller system of claim 3 wherein said front and back semi-rigid paper plates further comprise indicia printed thereon.

9. The improved roller system of claim 1 further comprising motor means operatively connected to at least one of said at least two roller units for propelling said improved roller system.

10. The improved roller system of claim 1 wherein said at least one roller unit comprises one of three and four roller units mounted within said roller support body in a respective three roller ball and four roller ball vehicle configuration.

11. The improved roller system of claim 1 wherein each ball-retaining cavity of said at least one roller unit is generally cylindrical in cross-sectional shape and has a diameter slightly greater than the diameter of said roller ball.

12. An improved roller system comprising:
a roller support body having a center longitudinal axis and a base wall;
at least two roller units mounted within said roller support body, each of said at least one roller units including;
a generally cylindrical ball-retaining cavity which extends upwards within said roller support body;
a generally spherical roller ball rotatably mounted there within;
roller ball retention means mounted on said roller support body for rotatably retaining said roller ball within said ball-retaining cavity with a lower portion of said roller ball extending below said base wall of said roller support body such that said roller support body is rollably supported on said roller ball;
at least two book pages each constructed as including a middle foam plate and front and back semi-rigid paper plates mounted on and sandwiching said middle foam plate;
book binding means binding said at least two book pages in a book format wherein said at least two book pages are generally parallel with one another; and
at least one of said at least two book pages and said book binding means mounted on said roller support body.

13. The improved roller system of claim 12 wherein said middle foam plate is larger than said front and back semi-rigid paper plates such that said middle foam plate extends beyond the edges of said front and back paper plates whereby the edges of each of said panels are foam to generally prevent contact injuries to children handling said improved roller system.

14. The improved roller system of claim 12 wherein said book binding means comprises a reinforced paper sheet extending across and connecting adjacent edges of each of said at least two book pages whereby said at least two book pages are secured in a book format, said pages being freely movable between a closed position aligned generally parallel with one another and an open position partially separated from one another.

15. The improved roller system of claim 14 wherein said book binding means is connected to adjacent same-side edges of said at least two book pages by an adhesive substance.

16. The improved roller system of claim 12 further comprising motor means operatively connected to at least one of said at least one roller units for propelling said improved roller system.

17. The improved roller system of claim 12 wherein said at least one roller unit comprises one of three and four roller units mounted within said roller support body in a respective three roller ball and four roller ball vehicle configuration.

18. The improved roller system of claim 12 wherein each ball-retaining cavity of said at least one roller unit is generally cylindrical in cross-sectional shape and has a diameter slightly greater than the diameter of said roller ball.

19. An improved roller system for vehicle-shaped books comprising:
a roller support body having a center longitudinal axis and a base wall;
at least three roller units mounted within said roller support body, each of said at least three roller units including;
a ball-retaining cavity which extends upwards within said roller support body;
a generally spherical roller ball rotatably mounted there within;
roller ball retention means mounted on said roller support body for rotatably retaining said roller ball within said ball-retaining cavity with a lower portion of said roller ball extending below said base wall of said roller support body such that said roller support body is rollably supported on said roller ball;
a main book support structure mounted on and extending from said roller support body;
at least two book pages;
book binding means binding said at least two book pages in a book format wherein said at least two book pages are generally parallel with one another; and
at least one of said at least two book pages and said book binding means mounted on said main book support structure on said roller support body.

20. The improved roller system of claim 19 wherein said at least two book pages each are constructed as including a middle foam plate and front and back semi-rigid paper plates mounted on and sandwiching said middle foam plate and said middle foam plate is larger than said front and back semi-rigid paper plates such that said middle foam plate extends beyond the edges of said front and back paper plates whereby the edges of each of said panels are foam to generally prevent contact injuries to children handling said improved roller system.
